# EUROPEAN PATENT APPLICATION

(11) **EP 4 190 759 A1**
(43) Date of publication of application: **07.06.2023**
(21) Application number: 22211135.3
(22) Date of filing: 02.12.2022
(51) Int. Cl.: C04B 28/02, C04B 28/12, C04B 111/60

(54) **IMPROVED LAYER OF A MULTILAYER STRUCTURE OF A BUILDING**

(30) Priority: 03.12.2021 IT 202100030680
(71) Applicant: Green Building S.r.l., 35020 Due Carrare (PD) (IT)
(72) Inventor: CAPODAGLIO, Riccardo, 35020 DUE CARRARE (PD) (IT); CAPODAGLIO, Elena, 35123 PADOVA (IT)
(74) Representative: Braidotti, Andrea

(57) **Abstract**

Layer (10) of a horizontal structural element (30) of a building, preferably said layer defining the lightened screed layer of a floor, characterized in that said layer (10) ...

Covering layer (21) of a multilayer wall structure (20) of a building, (preferably said layer defining the plaster layer of a wall,) characterized in that said covering layer (21) ...

... comprises a solidified material (1) and comprising a mixture, which is intended to solidify, of pomace with at least one binder, said pomace comprising grape skins and/or grape seeds and/or grape stalks.

Use of pomace to obtain a material (1) comprising a mixture, which is intended to solidify, of pomace with at least one binder, said pomace comprising grape skins and/or seeds and/or stalks, said material (1) being configured and intended to be used for the construction of a covering layer (10, 21) of a horizontal structural element (30), for example of a floor, or of a wall structural element (22).

Method for making a layer (10, 21) of a horizontal structural element (30), for example of a floor, or a wall structural element (22), characterized in that it comprises:
- at least one preparation phase of pomace, in which said pomace comprising grape skins and/or seeds and/or stalks,
- at least one stage of mixing said pomace with at least one binder, to thus obtain "said" material (1),
- at least one step of applying said material (1),
- at least one solidification step of said material (1) thus applied, to thus obtain said layer (10, 21) on a a structural element.

## Description

### FIELD OF TECHNIQUE

The present invention relates to the use of pomace to obtain an improved material for making a layer of a multilayer structure of a building, for example of a horizontal or wall multilayer structure of a building. In particular, the material is suitable for being used for making at least one layer of a floor, or for making at least one lining layer of an internal wall of a building. In particular, the material can be suitably used in the creation of screed layers, for example a layer of lightened screed or substrate in a floor slab, and/or in the creation of a layer of plaster to coat the masonry walls of a building.

The term "screed" hereinafter means any laminar layer, with horizontal development, provided in buildings below the exposed floors. In particular, the purpose of the screed is generally to level a surface making it perfectly flat in order to distribute the load of the overlying elements which make up the final flooring, normally tiles, strips, planks or the like.

Advantageously, said material can also be used to make the so-called "lightweight screed", also known by the term "subbase", which is a layer of material that can be added to the screed briefly introduced above or, in some applications, replace the latter. Normally, the lightened screed or substrate is provided deeper than the traditional screed and can generally incorporate pipes and/or wiring of suitable water or electrical systems.

In the following, the term "plaster" shall mean a protective and/or aesthetic coating layer of a wall. Advantageously, said material can also be used to make a layer of plaster.

The present invention also relates to a horizontal multilayer structure (for example a floor) or a wall in which there is at least one layer which is made of or comprises the aforementioned material.

The present invention also relates to a method for making a layer of a horizontal multilayer structure, for example of a floor, or of a multilayer wall structure.

### STATE OF THE ART

As is known, there are currently various types of screed with different characteristics based on the different intended use, for example residential, industrial, internal or external. The most common and widespread are called natural-based, self-leveling and traditional. More in detail, the natural-based screed is normally used for the renovation of dated buildings, it is composed of almost totally pure natural lime. The self-leveling screed is normally mixed with water, becoming a fluid mixture and therefore easy to level during its application. The traditional screed is the most used screed and is normally made directly on site with sand, cement and water.

As is known, plaster is used as a protective coating layer for masonry walls. The plaster is also often used mixed with dyes, to give it a further aesthetic function.

Traditionally, the plaster comprises a mortar composed of a binding substance (or hardener) which incorporates a portion of sand with a particle size with a maximum diameter generally not exceeding 2 millimetres. Known types of plaster are distinguished on the basis of the binder used. In more detail, lime-based plaster is known in the field, where the binding substance is lime (for example hydrated lime or hydraulic lime, in the form of powder or slaked lime). Lime-cement plaster is also known, where the binding substance is a mixture of hydrated lime and cement, with a prevalence of lime. Gypsum-based plaster is also known, where the binder is exclusively gypsum and clay-based plaster, where the only binder is clay.

However, the materials currently used to make a layer of screed or plaster have proved to be in practice not free from drawbacks. The main drawback lies in the fact that the materials currently used have a high environmental impact, in particular their disposal is not environmentally friendly.

A further drawback lies in the fact that the materials currently used are particularly heavy and mechanically fragile.

A further drawback lies in the fact that the materials currently used do not appear to have suitable characteristics in terms of thermal and/or acoustic insulation.

A further drawback lies in the fact that the materials currently used are not easily workable.

US 2019/0062211 describes a method for the preparation of a building material which provides for mixing cellulose nano-fibers obtained from a vegetable matrix within a typical Portland cement mixture. This solution is not fully satisfactory since the manufacturing processes of the vegetable material which are necessary for the production of the cellulose nano-fibres are expensive and complicated to implement.

WO 2014/147392 describes a method for making a building material in which nanoparticles obtained from the treatment of material derived from herbaceous plants are added to a cement mixture. This solution is not fully satisfactory since it provides for the use of herbaceous plants only, in order to obtain an optimal viscosity of the product, as well as fruits and other materials, which are not composed solely of lignin. This severely limits the type of agricultural waste that can be used, thus making the recycling method less efficient.

CN107188493 describes a method for preparing a fireproof brick which includes plant material, cement binders and water. However, this solution is not fully satisfactory since the material obtained allows only bricks to be made.

CN108751854 describes a method for recycling cement aggregates by pulverizing them, mixing them with rice husk and other ingredients in order to recreate a building material.

### OBJECTS OF THE INVENTION

The object of the invention is to create a layer of a multilayered building structure, for example of a horizontal or wall multilayered building structure, with a material which allows to solve, at least in part, the aforementioned drawbacks present in traditional solutions.

Another object of the invention is that of making a layer of a building with a material which is highly environmentally friendly.

Another object of the invention is to make a layer of a building with a material the obtainment and/or disposal of which has little or no impact on the environment.

Another object of the invention is to make a layer of a building with a material which can be obtained simply, quickly and with low costs.

Another object of the invention is to make a layer of a building with a material which is easily workable and malleable.

Another object of the invention is to make a layer of a building with a material which is particularly light.

Another object of the invention is to produce a layer of a building with a material having optimal characteristics in terms of adhesion capacity to the substrate.

Another object of the invention is to create a layer of a building with a material which is alternative and/or better than traditional solutions, and in particular compared to materials currently available on the market for making a layer of lightened screed or a layer of plaster.

Another object of the invention is to make a layer of a building with an affordable material, thus allowing its diffusion on a large scale.

Another object of the invention is to make a layer of a building with a biodegradable material.

Another object of the invention is to produce a layer of a structural and/or covering element which is highly eco-compatible and with optimal characteristics in terms of lightness and both thermal and acoustic insulation.

Another purpose of the invention is to reuse materials which would otherwise be considered waste.

Another object of the invention is to propose a method for reusing the pomace.

### SUMMARY OF THE INVENTION

All these objects, both individually and in any combination thereof, as well as other objects which will appear from the following description, are achieved, according to the invention, with a layer as defined in claim 1 or 2, and/or with a use of pomace as defined in claim 12 and/or by a method as defined in claim 13.

### DESCRIPTION OF THE FIGURES

The present invention is hereinafter further clarified in some of its preferred practical embodiments, given for purely exemplifying and non-limiting purposes with reference to the enclosed tables of drawings, in which:
- Figure 1: shows a schematic sectional view of a floor comprising a layer made with a material according to the invention,
- Figure 2: is a perspective view of a layer of plaster made with a material according to the invention applied on a masonry wall,
- Figure 3: shows the layer of plaster applied on a wall of fig. 2 according to a horizontal cross section,

### DETAILED DESCRIPTION OF THE INVENTION AND SOME PREFERRED EMBODIMENTS ITS

Below it is specified that "pomace" or "pomace" means the residues of the pressing/crushing of the grapes and, in particular, include skins, grape seeds (seeds) and, possibly, even stalks. In particular, the Italian legislation (cf. Gazzetta Ufficiale, 16 December 1998) defines as "pomace" the complex of solid parts of the grape, such as skins, pips, with or without the stalk.

Indicatively, from about 100kg of fresh grapes, in addition to about 80kg of must, about 10-12kg of peel, about 3-4kg of grape seeds and about 3-4kg of stalks are obtained. Furthermore, 80% of the must obtained is destined to become wine, while the remaining 20% is a waste product which constitutes the pomace.

Suitably, pomace includes the waste obtained from the transformation of grapes into wine.

The material 1 - to be used according to the invention to make a layer 10 of a horizontal structural element 30, for example of a floor in a building, and/or a covering layer 21 in a wall structural element 22, for example of a wall 20 of a building - includes pomace. Conveniently, the pomace present in the material 1 can be pressed and compacted. Conveniently, the pomace present in the material 1 can be whole or minced.

In more detail, the material 1 comprises a solidifyable mixture/dough containing pomace, and in which said pomace comprises grape skins and/or seeds and/or stalks.

Conveniently, the material 1 comprises the pomace obtained from wine processing waste.

Advantageously, before being used in the material 1, the pomace is preliminarily dried, for example by leaving it in a dry and airy place, or by placing it in suitable closed rooms, in which the temperature and humidity are controlled.

Conveniently, in a possible embodiment, the material 1 can exclusively comprise whole pomace, i.e. as obtained from wine processing and without carrying out any shredding and/or shredding. Conveniently, the material 1 can be obtained by compacting the whole pomace together with a certain quantity of crushed and/or chopped pomace. Conveniently, the material 1 can be obtained by exclusively compacting crushed and/or chopped pomace.

In particular, advantageously, as mentioned, the dried pomace can be shredded and/or shredded, even if only partially. Conveniently, the shredding and/or mincing is carried out in such a way as to obtain powders and/or parts of pomace of uniform granulometry, and preferably ranging from 4 to 8 cm (in particular for the stalks). Conveniently, the particle size can also be selected on the basis of the density required in the material, and in particular for higher densities, smaller particle sizes are required, while for lower densities, larger particle sizes are required. Subsequently, the resulting powders and/or parts of pomace are compressed and/or compacted alone, or in combination with whole pomaces, by means of suitable machinery. Conveniently, the material 1 comprises exclusively or mainly chopped pomace with a particle size of about 4-8 cm.

Preferably, the material 1 can comprise a quantity of pomace of about 40 -140 Kg/m³.

Conveniently, the material 1 comprises a mixture of pomace with at least one binder. Preferably, the material 1 is prepared by mixing the pomace with at least one binder, preferably cement or lime.

Advantageously, in a possible embodiment, the material 1 is prepared by mixing the pomace with at least one binder, preferably cement or lime, and with water.

Advantageously, in a possible embodiment, the material 1 is prepared by mixing the pomace with at least one binder, preferably cement or lime, and with at least one additive. Preferably, said additive is configured to improve the processing and adhesion of the material to the support layer, in particular to the masonry support. Preferably, said additive comprises sands, in particular graded sands.

Preferably, in some possible embodiments, the material 1 can also comprise one or more of the following additional materials: polystyrene, wood fibers, rock wool, clay, expanded perlite .

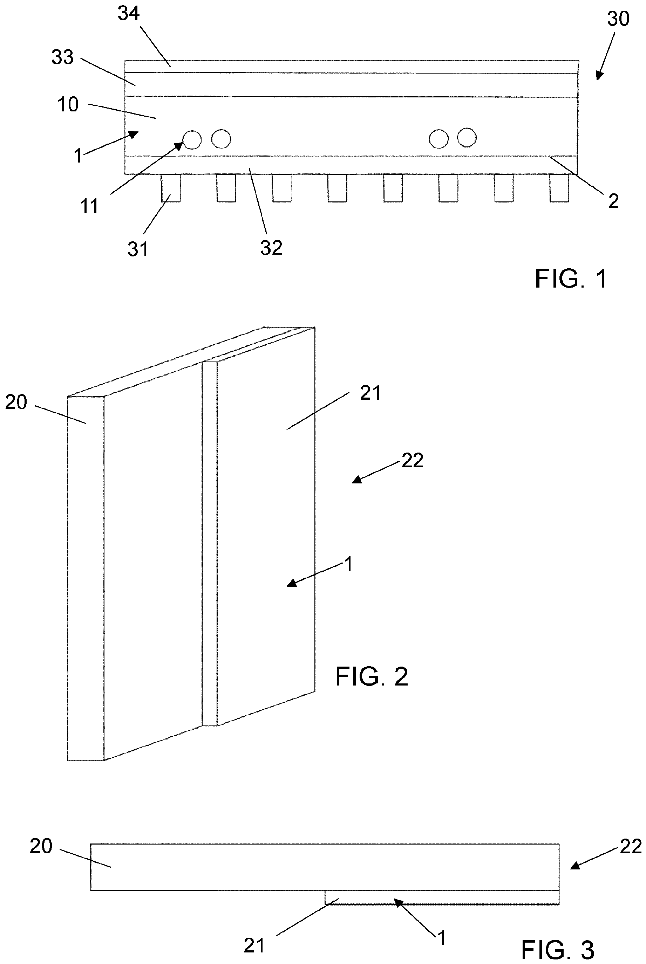

Conveniently, as shown for example in figure 1, the pomace is mixed with water and cement to thus obtain a mixed material 1 to be used as a screed to create a layer 10, and preferably the lightened substrate, of a horizontal structural element 30 defining the floor and/or the attic of a building.

Conveniently, the quantities of water and cement are mixed with the pomace, to thus obtain the material 1 in the normal doses used for making the screed, and this on the basis of the stiffness characteristics required by the structural calculations.

Preferably, in a first possible embodiment, the material 1 comprises:
- about 60% by weight of pomace,
- about 20% by weight of sand,
- about 20% by weight of cement.
Preferably, in a first possible embodiment, the material 1 comprises:
- about three parts by weight of pomace,
- about one part by weight of sand,
- about one part by weight of cement.

Preferably, in this first possible embodiment, the material 1 also provides for the addition of water as needed.

Preferably, lime or cement is the one traditionally used to make a screed. Preferably, the concrete is Portland cement or similar.

Conveniently, the present invention relates to a layer of a horizontal multilayer structure, and preferably the lightened screed layer 10 of a horizontal structural element 30 defining a floor, in which said layer comprises - and preferably consists of - a solidified mixture comprising the aforementioned material 1 containing pomace, water and cement.

In accordance with the embodiment illustrated in the attached figure 1, the material 1 comprising a mixture of pomace with water and cement is used in the creation of a layer of screed 10, in particular lightened (or underlay), of a floor. Suitably, therefore, the layer 10 comprises a solidified mixture of the material 1 formed by pomace mixed with water and cement.

Conveniently, the layer 10 of lightened screed thus obtained can incorporate pipes and/or wiring 11 of water and/or electrical systems.

Advantageously, the material 1 is particularly suitable for being used for making a layer 10 of lightened screed for floors in wooden material.

Conveniently, the horizontal structural element 30 which defines the floor comprises beams 31 at the bottom, which mechanically support slats 32. Advantageously, the slats 32 support the lightened screed layer 10.

Conveniently, the horizontal structural element 30 which defines the floor comprises at least one layer of anti-vapour barrier configured to prevent the formation of condensation inside the floor itself and interposed between the strips 32 and the layer of screed layer 10.

Conveniently, in accordance with the embodiment illustrated in figure 1, the horizontal structural element 30 comprises at least one further layer of screed 33, positioned above the screed layer 10.

Furthermore, the horizontal structural element 30 advantageously comprises at least one layer of flooring 34, arranged above the layer of screed 33 and mechanically fixed to the latter.

Advantageously, from an operational point of view, the material 1 - once prepared - can be spread on an underlying surface of the attic, for example on the slats of a wooden attic, and left to dry, thus forming of lightened screed the layer 10 of the horizontal structural element 30 defining the floor.

In accordance with the embodiment illustrated in the attached figures 2 and 3, the pomace is mixed with lime and additives to thus obtain a mixed material 1 to be used to create a covering layer 21, and preferably a plaster or smoothing layer, in a vertical multilayer structure 20, in particular of the wall type.

Preferably, in a second possible embodiment, the material 1 comprises:
- about 40 - 60% by weight of pomace,
- about 20% by weight of lime,
- about 20% by weight of additives, and preferably of sands.
Preferably, in a second possible embodiment, the material 1 comprises:
- about two or three parts by weight of pomace,
- about one part by weight of lime,
- about one part by weight of additives, and preferably of sands.

Preferably, also in this second possible embodiment, the material 1 provides for the addition of water as needed.

Preferably, lime is the one traditionally used to make plaster. Preferably, the lime is hydrated lime or hydraulic lime.

Conveniently, the amounts of lime and additives are mixed with the pomace, to thus obtain the material 1 in the normal doses used for making the plaster.

Conveniently, the present invention relates to a covering layer 21 in particular in a vertical multilayer structure 20, in particular for making the plaster layer on a wall, in which said layer comprises - and preferably consists of - a solidified mixture comprising the aforementioned material 1 containing pomace, lime and additives.

Advantageously, in accordance with a preferential embodiment, the material 1 for making the covering layer 21 can be applied by spray.

Conveniently, the multilayer wall structural element 22 can comprise a vertical load-bearing wall or other load-bearing masonry structures 20. Conveniently, pipes and/or wiring of systems can be provided housed in suitable grooves in the wall.

Preferably, the wall structural element 22 comprises at least one reinforcing mesh which is configured to allow the material 1 to grip. Advantageously, the wall structural element 22 therefore comprises a covering layer 21 made with the material 1. Advantageously, the wall structural element 22 finally comprises a final finishing layer, suitably made with paint and/or other ornamental elements envisaged by the project.

Advantageously, from an operational point of view, once prepared, the material 1 is applied to the underlying vertical wall 20 of a multilayer wall structural element 22 and is left to dry, thus forming - once solidified - a covering layer 21.

From what has been said it results that the material 1 is particularly advantageous in that it is light, malleable, biodegradable, highly breathable, with high energy efficiency, with high thermal and acoustic insulation characteristics.

Conveniently, the mixing of the pomace with the binder and the other components, to thus obtain the material 1 in the liquid/fluid state (and preferably it is a multiphase liquid comprising a liquid and a solid phase) can be carried out on site and directly on site, or previously.

The present invention also relates to a use (or rather a re-use) of the pomace to obtain a material 1 to be used for the realization of a layer 10 of a horizontal structural element 30 or of a covering layer 21 of a wall structural element 22, preferably for the construction respectively of a layer of a floor or a wall of a building.

The present invention also relates to a method of reusing pomace to obtain a material 1 to be used for making a layer 10 of a horizontal structural element 30 or a covering layer 21 of a wall structural element 22, preferably for making respectively of a layer of an attic or of a wall of a building.

Conveniently, said method provides for making said pomaces available, wherein said pomaces comprising grape skins and/or seeds and/or stalks, and to mix them with at least one binder, preferably with lime or cement.

Conveniently, in a possible embodiment, said method provides for mixing the pomaces and the binder also with water.

Conveniently, in a possible embodiment, said method provides for mixing the pomace and the binder also with additives.

All the characteristics and references described above with reference to the material 1 are to be understood as described also with reference to the method for reusing pomace, also an object of the present invention.

Conveniently, said method for reusing the pomace comprises a step for preparing pomace obtained from wine processing waste.

Advantageously, the pomace reuse method can include a drying phase, in which the pomace is preliminarily dried, for example by leaving it in a dry and airy place, or by placing it in suitable closed rooms, where the temperature and humidity are controlled.

Preferably, said pomace reuse method comprises a compacting step in which the dried pomace is mechanically compacted.

Conveniently, the compaction step can be achieved by compacting exclusively the whole pomace, i.e. as obtained from wine processing and without carrying out any shredding and/or crumbling.

Otherwise, the compaction phase can be achieved by compacting the whole pomace together with a certain quantity of crushed and/or chopped pomace.

In particular, advantageously, as mentioned, the pomace reuse method can provide for a trituration step, in which the dried pomace can be triturated and/or shredded, even only partially. Conveniently, the trituration and/or shredding is carried out in such a way as to obtain powders and/or parts of pomace of uniform granulometry, and preferably ranging from 4 to 8cm.

Subsequently, the resulting powders and/or part of pomace are compressed alone, or in combination with whole pomace, by means of suitable machinery.

The present invention also relates to a method for making a layer 10 of a horizontal structural element 30 or a covering layer 21 of a wall structural element 22, preferably for making a layer of a floor or a wall of buildings, characterized by the fact that they include:
- at least one preparation phase of said pomace, in which said pomace comprising grape skins and/or seeds and/or stalks,
- at least one mixing step of said pomace with at least one binder, to thus obtain the material 1, ed
- at least one step of applying said material 1,
- at least one solidification phase of the material 1 thus applied, to thus obtain said layer 10 and 21.

In particular, the method for making a layer 10 or 21 can comprise a drying step of said pomace and/or a pressing and/or compacting step of said pomace.

All the characteristics and references described above with reference to the material 1 or with reference to the mixture or with reference to the use or method of reusing pomace are to be understood as described also with reference to the method for making said layer, which is also object of the present invention.

As is clear from what has been said, the present invention is particularly advantageous in that it allows to completely reuse the waste from the production of wine, thus obtaining a highly eco-compatible material with characteristics suitable for being used for making the lightening layer of a floor or of a wall cladding layer.

The present invention has been illustrated and described in a preferred practical embodiment thereof, but it is understood that executive variants can be applied to it in practice, without however departing from the scope of protection of the present patent for industrial invention.

## Claims

1. Layer (10) of a horizontal structural element (30) of a building, preferably said layer defining the lightened screed layer of a floor, **characterized in that** said layer (10) comprises a solidified material (1) comprising a mixture, which is intended to solidify, of pomace with at least one binder, said pomace comprising grape skins and/or grape seeds and/or grape stalks.

2. Covering layer (21) of a multilayer wall structure (20) of a building, preferably said layer defining the plaster layer of a wall, **characterized in that** said covering layer (21) comprises a solidified material (1) and comprising a mixture, which is intended to solidify, of pomace with at least one binder, said pomace comprising grape skins and/or grape seeds and/or grape stalks.

3. Layer according to claim 1 or 2 **characterized in that** said binder comprises cement.

4. Layer according to one or more of the preceding claims **characterized in that** said binder comprises lime.

5. Layer according to one or more of the preceding claims, **characterized in that** said pomace is chopped and/or ground.

6. Layer according to one or more of the preceding claims, **characterized in that** said pomace is mixed with at least one binder and with water.

7. Layer according to one or more of the preceding claims, **characterized in that** said pomace is mixed with at least one binder and with at least one additive, preferably said additive comprising at least one sand.

8. Layer according to one or more of the preceding claims **characterized in that** said pomace is dried.

9. Layer according to one or more of the preceding claims **characterized in that** it comprises:
- exclusively whole pomace, i.e. as they are obtained from wine processing and without any shredding and/or shredding,
- whole pomace together with a certain quantity of crushed and/or chopped pomace,
- only shredded and/or chopped pomace.

10. Layer according to one or more of the preceding claims **characterized in that** it comprises a quantity of pomace of about 40-140 kg/m³.

11. Layer according to one or more of the preceding claims **characterized in that** it comprises:
- about three parts by weight of pomace,
- about one part by weight of sand,
- about one part by weight of cement.

12. Use of pomace to obtain a material (1) comprising a mixture, which is intended to solidify, of pomace with at least one binder, said pomace comprising grape skins and/or seeds and/or stalks, said material (1) being configured and intended to be used for the construction of a covering layer (10, 21) of a horizontal structural element (30), for example of a floor, or of a wall structural element (22).

13. Method for making a layer (10, 21) of a horizontal structural element (30), for example of a floor, or a wall structural element (22), **characterized in that** it comprises:
- at least one preparation phase of said pomace, in which said pomace comprising grape skins and/or seeds and/or stalks,
- at least one stage of mixing said pomace with at least one binder, to thus obtain said material (1),
- at least one step of applying said material (1),
- at least one solidification step of the material (1) thus applied, to thus obtain said layer (10, 21).

14. Method according to the previous claim **characterized in that** said phase of making said pomaces available comprises a drying phase of said pomaces, and/or a step of pressing and/or compacting said pomaces

15. Method according to claim 13 or 14, **characterized in that** it comprises, preferably after said stage of mixing said pomace with at least one binder, a stage of mixing with at least one additive, in particular sands, more particularly classified sands.
